# EUROPÄISCHE PATENTSCHRIFT

(11) **EP 0 337 930 B1**
(45) Veröffentlichungstag und Bekanntmachung des Hinweises auf die Patenterteilung: **28.04.1993**
(21) Anmeldenummer: 89730099.2
(22) Anmeldetag: 10.04.1989
(51) Int. Cl.: C04B 35/00, B28B 13/02

(54) **Verfahren und Vorrichtung zur Herstellung von keramischen Formkörpern**
Process and apparatus for the preparation of shaped ceramic bodies
Procédé et installation de préparation de pièces moulées céramiques

(30) Priorität: 11.04.1988 DE 3812356
(43) Veröffentlichungstag der Anmeldung: 18.10.1989
(73) Patentinhaber: PREUSSAG AKTIENGESELLSCHAFT, 30625 Hannover (DE)
(72) Erfinder: Hermanski, Werner, D-8600 Bamberg (DE); Barbian, Otto Alfred, D-6653 Blieskastel/Ballweiler (DE)

(56) Entgegenhaltungen:
- WO-A-84/02520
- GB-A- 2 000 990
- US-A- 3 387 972
- World Patent Index, Derwent Publications Ltd. Accession number 82-E2714E (30 06 1981)
- World Patent Index, Derwent Publications Ltd. Accessionnumber 85-311056 (21 08 1985)

## Beschreibung

Die Erfindung bezieht sich auf ein Verfahren und eine Vorrichtung zur Herstellung von keramischen Formkörpern aus anorganischen Rohstoffen durch Zusammenfügen von Partikeln in einer Sinterform mittels eines stationären elektrischen Hochspannungsfeldes und auf die nach dem Verfahren erzeugten keramischen Formkörper, die eine sehr hohe Dichte und andere verbesserte Eigenschaften aufweisen.

Keramische Formkörper werden üblicherweise aus zerkleinertem, anorganischem Rohmaterial unter Zusatz von Wasser und ggf. Bindemitteln hergestellt, wobei industrielle Produkte durch Pressen oder Extrudieren erzeugt werden.

Für gewisse Anwendungsfälle ist die Dichte dieser Erzeugnisse nicht ausreichend.

Aus DE-PS 32 48 537 ist ein Verfahren zur Herstellung von Sinterformkörpern geringer Dichte aus Quarzsand in einem elektrischen Hochspannungsfeld bekannt. Hier wird eine Form mit voneinander isolierten elektrisch leitenden Wänden verwendet, die beispielsweise aus Graphit bestehen kann. Bei einem Versuch, dieses Verfahren zu verbessern, zeigte es sich jedoch, daß zwischen die beiden Elektroden der Form eingebrachte Sandkörner in einem waagerechten Feld zwischen den Elektroden hin und her wanderten und sich schließlich im wesentlichen in der neutralen Zone zwischen den Elektroden in einem lockeren Gefüge aneinander lagerten. Weder eine Erhöhung der Feldstärke noch andere Abwandlungen im Rahmen des vorbeschriebenen Vorschlages führten zu keramischen Produkten, die nach der Sinterung in irgendeiner Weise auch nur die Qualität der nach üblichen Verfahren hergestellten keramischen Formkörper verbessern konnten.

Insbesondere konnte weder eine höhere Kaltdruckfestigkeit noch eine höhere Dichte erreicht werden.

Aus US 338 7972 ist ein Verfahren zum verschweißen von Teilchen bekannt, bei dem die Teilchen einer Koronaentladung ausgesetzt und dabei geladen werden und anschließend in einem elektrostatischem Feld von einer leitenden Form angezogen werden. Nach diesem Verfahren ist es notwendig, das elektrostatische Feld während des Schweißens aufrecht zu erhalten. Dadurch ergeben sich die schon genannten Nachteile, insbesondere konnte keine höhere Kaltdruckfestigkeit erreicht werden.

Die Erfindung hat sich die Aufgabe gesetzt, auf trockenem Wege und mittels elektrostatischen Feldes keramische Formkörper im wesentlichen aus anorganischen Rohstoffen mit einer hohen Dichte und damit auch weiteren verbesserten mechanischen Eigenschaften herzustellen.

Die Lösung dieser Aufgabe ist in den Ansprüchen 1 und 11 angegeben, die Unteransprüche nennen weitere bevorzugte Einzelheiten.

Nach der Erfindung wird eine Sinterform aus elektrisch nicht leitendem Material in einem elektrostatischen Feld zwischen zwei Elektroden angeordnet. Durch eine erste Elektrode, die vorzugsweise außerhalb der Form angeordnet ist, wird den anorganischen Partikeln eine Ladung vermittelt. Eine zweite Elektrode ist an einer Außenwand der Sinterform angeordnet, beispielsweise kann sie die Aufnahmefläche für die Sinterform bilden. Die aufgeladenen Partikel werden durch die zweite Elektrode beschleunigt angezogen. Sie lagern sich dabei an der Wand der Sinterform an. Sie geben ihre Ladung dabei nur allmählich an die ein Dielektrikum darstellende Sinterform ab. Nachfolgende aufgeladene Partikel werden zwar von der Ladung der bereits angelagerten Partikel abgestoßen, die überwiegende Anziehungskraft des elektrostatischen Feldes führt jedoch zu einer verdichteten Anlagerung weiterer Partikel. Der Strom aufgeladener Partiel muß gleichmäßig sein, da eine Unterbrechung oder Störung des Ladungstransportes wenigstens zu Inhomogenitäten in der Struktur der angelagerten Partikel führt. Durch die zweite Elektrode werden die aufgeladenen Partikel im elektrostatischen Feld beschleunigt. Die zweite Elektrode kann daher auch als Beschleunigerelektrode bezeichnet werden. Der Aufprall und Kontakt der trockenen, geladenen und beschleunigten Partikel auf die und zu den bereits angelagerten, Partikel führen zu einer hohen Dichte der Struktur. Dies hohe Dichte bleibt erhalten, wenn anschließend der Formkörper in der Sinterform gesintert wird. Um die gewünschten mechanischen Eigenschaften zu erhalten, werden der Feldlinienvorlauf und die Feldstärke auf die Geometrie des keramischen Formkörpers abgestimmt.

Die maximal erreichbare Dichte hängt von verschiedenen Faktoren ab, wie beispielsweise Größe und Form des Formkörpers, Art des anorganischen Rohstoffes, Korngröße der Partikel und der Feldstärke des elektrostatischen Feldes. Eine hohe Feldstärke bis zur Durchlagsfeldstärke ist für eine große Verdichtung vorteilhaft, jedoch ist zu beachten, daß ein Durchschlagen vermieden werden muß. Ein Durchschlagen kann beispielsweise bei hoher Luftfeuchtigkeit auftreten, weshalb das Verfahren bevorzugt in einer Atmosphäre durchgeführt wird, deren Feuchtigkeit 45 % nicht überschreitet. Für die vorgesehenen Formkörper scheint eine Feldstärke von über 100 kV/m bis etwa 600 kV/m infrage zu kommen. Für Sonderfälle sind jedoch auch Abweichungen aus diesem Bereich denkbar. Zur Einstellung jeweils optimaler Bedingungen wird zweckmäßigerweise eine Spannungsquelle verwendet, mit der die Feldstärke in diesem Bereich regelbar ist.

Diese Regelbarkeit wird insbesondere auch dafür verwendet, die Feldstärke oberhalb des Füllstandes während des gesamten Füllvorganges weitestgehend konstant zu halten.

Es ist vorteilhaft, die Zuführung der aufgeladenen Partikel zu der Form in der Richtung der Schwerkraft vorzusehen. Soweit der herzustellende Formkörper nicht etwas anderes erfordert, sollte auch die Feldwirkungskraft des elektrostatischen Feldes im wesentlichen entsprechend der Schwerkraft gerichtet sein, wodurch in dieser Vorzugsrichtung verbesserte mechanische Eigenschaften erreicht werden.

Für eine Vergleichmäßigung der mechanischen Eigenschaften in allen Richtungen des keramischen Formkörpers ist es zweckmäßig, das elektrostatische Feld senkrecht zur Schwerkraft anzuordnen. Um Vorzugsrichtungen der mechanischen Eigenschaften senkrecht zur Schwerkraft zu erhalten, kann eine weitere mechanische Kraft, z.B. Fliehkraft, senkrecht zur Schwerkraft und parallel zur Feldrichtung überlagert werden.

Eine hohe Dichte läßt sich erreichen, wenn die Korngröße der anorganischen Partikel im Korngrößenbereich von 0 bis 1 mm liegt. Bevorzugt wird ein Korngrößenbereich von 0,03 bis 0,06 mm. Besonders gute Ergebnisse wurden erhalten, wenn die Korngröße der Partikel wenig voneinander abwich, also ein sehr enges Kornband aus den vorgenannten Bereichen verwendet wurde. Es kann sogar äußerst feinkörniges Material eingesetzt werden, das sich in trockenem Zustand unter einachsigem Druck nicht sehr verdichten läßt, sondern bei Verdichtung elastisch zurückfedert.

Ein bevorzugtes Material für die Sinterform ist Sinterkorund. Eine solche Form hat gegenüber den in DE-PS 32 48 537 vorgeschlagenen Formen aus Graphit den Vorzug, einen hohen spezifischen elektrischen Widerstand zu haben, wodurch die Herstellung dichter keramischer Formkörper nach dem erfindungsgemäßen Verfahren ermöglicht wird, außerdem verändert sie sich während des Sintervorganges nicht und kann daher mehrfach verwendet werden. Die Sinterform und die Elektroden sind der Form der herzustellenden Formkörper anzupassen.

Für den Zuführung der Partikel zur ersten Elektrode wird ein Rüttelsieb bevorzugt, das durch oszillierende Bewegungen in wenigstens zwei Raumrichtungen die Partikel in einem zeitlich konstanten Strom und eine über den Zuführungsquerschnitt gleichmäßige Korngrößenverteilung abgibt.

Als erste Elektrode kann unterhalb des Siebes und der Zuführungseinrichtung und oberhalb der Sinterform eine Ringelektrode verwendet werden, die die Partikel auflädt. Vorzugsweise ist diese Ringelektrode negativ, so daß auch die Partikel eine negative Ladung erhalten. Diese Ringelektrode muß aus leitendem Material, beispielsweise aus Kupfer oder Graphit, bestehen. Beispielweise zur Anpassung an den Öffnungsquerschnitt der Sinterform kann der Querschnitt des zugeführten Stromes von Partikeln sowie auch die Elektrode eine vom Kreis abweichende Form aufweisen.

Als erste Elektrode ist auch eine Stabelektrode möglich, die wenigstens eine Spitze aufweist, an der eine Koronaentladung stattfindet, durch welche die Partikel vorzugsweise ebenfalls negativ aufgeladen werden, bevor sie sich unter dem Einfluß des elektrostatischen Feldes in der Sinterform anlagern. Insbesondere zur Herstellung von ringförmigen Formkörpern und anderen Hohlkörpern kann eine von der Sinterform umgebene Elektrode zentrisch zu einer die Form umhüllenden Mantelelektrode angeordnet sein.

Als Spannungsquelle wird ein Generator verwendet, der eine ausreichende Spannung bzw. eine genügende Potentialdifferenz liefert. Gegebenenfalls können auch mehrere Generatoren so zusammengeschaltet werden, daß sie die notwendige Potentialdifferenz ergeben.

Als anorganische Rohstoffe kommen alle geeigneten Materialien für keramische Produkte infrage wie beipielsweise Oxide (z.B. SiO₂ , Al₂O₃ , ZrO ₂ ), Nitride (z.B. Si₃N₄), Boride (z.B. TiB₂), Seltene Erden (z.B. Y und dessen Verbindungen) und deren Mischungen oder Verbindungen. Insbesondere können nach dem erfindungsgemäßen Verfahren auch keramische Supraleiter hergestellt werden.

Gegebenenfalls können auch weitere feinkörnige, trockene Stoffe verwendet oder hinzugefügt werden, die für einen gesinterten Formkörper geeignet sind. Eine Verwendung von Bindemitteln wie bei herkömmlichen keramischen Erzeugnissen ist jedoch nicht notwendig.

Durch Veränderung der elektrischen Feldstärke während des Einfüllvorganges kann die Dichte des keramischen Formkörpers örtlich gezielt verändert werden.

Die erfindungsgemäß durch das elektrostatische Feld erzeugte Packung der Partikel wies eine hohe Dichte auf, wie sie durch einachsiges Pressen nicht zu erzielen war. Diese Struktur blieb beim Sintern erhalten. Es zeigte sich, daß beim Sintern eine geringere Zeit und eine niedrigere Temperatur erforderlich waren. Dies ist auf die dichtere Packung der Partikel zurückzuführen.

Erfindungsgemäß hergestellte Muster wurden mit Vergleichsmustern verglichen, die aus demselben Material unter Anwendung eines hohen Druckes sowie mit Zusatz von Bindemitteln gepreßt wurden. Es ergab sich, daß beispielsweise die Kaltdruckfestigkeit das 1,7-fache und mehr der in herkömmlicherweise hergestellten Körper betrug und eine Dichte von etwa mindestens 2,0 g/m³ gegenüber durchschnittlich 1,6 g/cm³ erreicht wurde. Verwendet wurde Artalschamotte 23, bestehend aus etwa 54,4 % SiO₂ und 30,9 % Al₂O₃ mit einem mittleren Korndurchmesser von 0,25 mm, das bei erfindungsgemäßer Herstellung bei 1400° C gesintert wurde. Die Versuche zeigten, daß bei einer Optimierung der Arbeitsbedingungen eine Dichte von über 2,2 g/cm³ mit diesem Material erreichbar sein wird. Die hergestellten Erzeugnisse wiesen gegenüber z.B. feuerfestem Material eine außerordentliche Härte auf. Sie lassen darüberhinaus eine geringe und zudem richtungsabhängige Wärmeausdehnung bei Erhitzung erwarten.

Ausführungsbeispiele der Vorrichtung werden anhand der beigefügten vereinfachten Zeichnungen kurz beschrieben.
- Fig. 1: zeigt eine Einrichtung mit einer Ringelektrode zur Erzeugung eines senkrechten Feldes für die Herstellung beliebiger Formkörper und
- Fig. 2: eine Vorrichtung mit einer zentrischen Elektrode zur Erzeugung eines waagerechten Feldes für die Herstellung ringförmiger und anderer Hohlkörper.

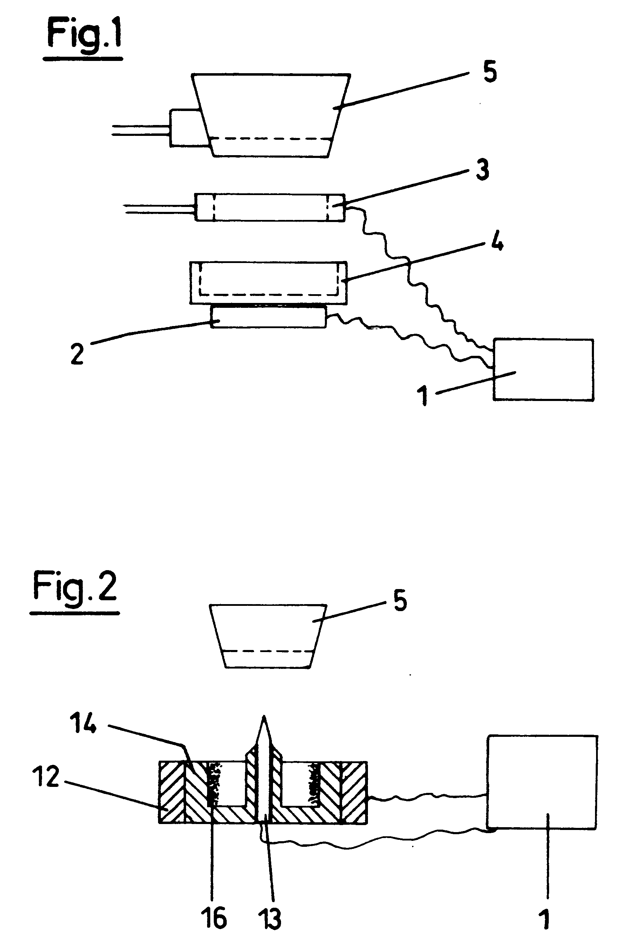

Nach Fig. 1 wird eine Spannungsquelle 1, beispielsweise ein Generator, verwendet, der eine dem elektrostatischen Feld entsprechende Spannung erzeugt. Er ist mit einer positiven Elektrode 2 verbunden, die als Platte zur Unterstützung einer Sinterform 4 ausgebildet ist. Er ist weiter mit einer negativen Elektrode verbunden, die als Ringelektrode ausgebildet ist und oberhalb der Sinterform angeordnet wird. Die Elektrode 2 besteht zweckmäßigerweise aus Kupfer, die Elektrode 3 aus Graphit oder vorzugsweise ebenfalls aus Kupfer. Über der Elektrode 3 ist die Zuführungseinrichtung in Form eines Rüttelsiebes 5 angeordnet. Die von dem Rüttelsieb 5 in einem gleichmäßigen dosierten Strom herabfallenden Partikel werden durch die ringförmige Elektrode 3 negativ aufgeladen und danach beschleunigt durch die Beschleunigerelektrode 2 in die Sinterform 4 hineingezogen. Die elektrostatischen Wirkungskräfte zwischen den Elektroden 3 und 2 führen dazu, daß sich die von der positiven Elektrode angezogenen negativ geladenen Partikel in der Sinterform 4 zu einer äußerst dichten Packung anlagern.

Gemäß Fig. 2 ist die erste Elektrode als Stabelektrode 13, umgeben von der Sinterform 14, ausgebildet und zentrisch zur zweiten Elektrode 12 angeordnet. Die Elektrode 12 umschließt ringförmig die Sinterform 14, an deren Innenwand sich die Partikel anlagern. Die Elektrode 13 weist jedoch eine Spitze auf, an der Koronaentladungen stattfinden können, und diese Spitze führt zu einer konzentrierten Aufladung der aus der Zuführungseinrichtung 5 herabfallenden anorganischen Partikel. Diese Partikel lagern sich unter Bildung einer ringförmigen Struktur 16 an der Sinterform 14 ab.

## Patentansprüche

1. Verfahren zum Herstellen von keramischen Formkörpern aus pulverförmigen anorganischen Rohstoffen durch Zusammenfügen der Partikel in einer Sinterform mittels eines stationären elektrischen Hochspannungsfeldes und anschließendem Sintern der erhaltenen Anordnung von Partikeln in der Sinterform, dadurch gekennzeichnet, daß der Feldlinienverlauf auf die Geometrie und die gewünschten mechanischen Eigenschaften des keramischen Formkörpers abgestimmt sind, den Partikeln vor der Einführung in die Sinterform eine vorzugsweise negative Ladung vermittelt wird, ein elektrostatisches Feld zwischen einer Stelle am Zuführungsweg der Partikel und wenigstens einer Außenfläche der Sinterform aufrechterhalten wird, dieses elektrostatische Feld eine Feldstärke aufweist, die eine hohe Dichte der sich in der Sinterform anlagernden, zusammengefügten Partikel ergibt, und die aufgeladenen Partikel gleichmäßig dosiert und trocken in eine Sinterform aus elektrisch nicht leitendem Material zugeführt werden.

2. Verfahren nach Anspruch 1, dadurch gekennzeichnet, daß die Feldstärke des elektrostatischen Feldes annähernd der Durchschlagsfeldstärke entspricht, vorzugweise im Bereich von über 100 kV/m bis etwa 600 kV/m liegt.

3. Verfahren nach Anspruch 1 oder 2, dadurch gekennzeichnet, daß die Zuführung der aufgeladenen Partikel im wesentlichen gleichgerichtet mit der Schwerkraft erfolgt.

4. Verfahren nach einem oder mehreren der Ansprüche 1 bis 3, dadurch gekennzeichnet, daß das elektrostatische Feld während des Auffüllens der Sinterform durch Nachregeln der Spannung weitgehend konstant gehalten wird.

5. Verfahren nach einem oder mehreren der Ansprüche 1 bis 4, dadurch gekennzeichnet, daß die Feldwirkungskraft des elektrostatischen Feldes auf die aufgeladenen Partikel im wesentlichen gleichgerichtet mit der Schwerkraft erfolgt, wobei in dieser Vorzugsrichtung verbesserte mechanische Eigenschaften erreicht werden.

6. Verfahren nach einem oder mehreren der Ansprüche 1 bis 4, dadurch gekennzeichnet, daß die Feldwirkungskraft des elektrostatischen Feldes auf die aufgeladenen Partikel im wesentlichen senkrecht zur Schwerkraft erfolgt, wobei gleichmäßigere mechanische Eigenschaften in allen Richtungen erreicht werden.

7. Verfahren nach Anspruch 6, dadurch gekennzeichnet, daß parallel zur Feldrichtung eine weitere mechanische Kraft der Schwerkraft überlagert wird.

8. Verfahren nach einem oder mehreren der Ansprüche 1 bis 7, dadurch gekennzeichnet, daß die Partikel einen Korngrößenbereich von 0 bis 1 mm, vorzugsweise von 0,03 bis 0,06 mm aufweisen, wobei insbesondere ein enger Bereich des Kornbandes in dem angegebenen Korngrößenbereich bevorzugt ist.

9. Verfahren nach einem oder mehreren der Ansprüche 1 bis 8, wobei trockene Partikel verwendet werden, dadurch gekennzeichnet, daß das Verfahren in einer Atmosphäre durchgeführt wird, deren relative Feuchtigkeit 45 % nicht überschreitet.

10. Verfahren nach einem oder mehreren der Ansprüche 1 bis 9, dadurch gekennzeichnet, daß eine Sinterform aus Sinterkorund verwendet wird.

11. Vorrichtung zur Durchführung des Verfahrens nach einem der Ansprüche 1 bis 10, bestehend aus wenigstens einer Spannungsquelle, einer positiven und einer negativen Elektrode zur Erzeugung eines elektrostatischen Feldes, aus wenigstens einer Sinterform und aus einer Einrichtung zur Zuführung von Partikeln sowie einem nachgeschalteten Sinterofen, dadurch gekennzeichnet, daß eine erste Elektrode (3, 13) zum Aufladen der Partikel am Zuführungsweg der Partikel und eine zweite Elektrode (2, 12) an einer Außenfläche der Sinterformen angeordnet ist, wobei die Sinterformen aus elektrisch nicht leitendem, bei Sintertemperatur beständig bleibendem Material bestehen.

12. Vorrichtung nach Anspruch 11, dadurch gekennzeichnet, daß ein Sieb (5) zur gleichmäßigen und dosierten Zuführung der anorganischen Partikel vorgesehen ist.

13. Vorrichtung nach Anspruch 11 oder 12, dadurch gekennzeichnet, daß die erste Elektrode eine Ringelektrode (3) ist, durch die die Partikel zuführbar sind, wobei sie aufgeladen werden und die zweite Elektrode (2) unter der Sinterform angeordnet ist.

14. Vorrichtung nach Anspruch 11 oder 12, dadurch gekennzeichnet, daß die erste Elektrode eine Stabelektrode ist, an deren Spitze sie vorzugsweise durch Koronaentladung aufgeladen werden, bevor sich die Partikel unter dem Einfluß des elektrostatischen Feldes in der Sinterform (4) anlagern.

15. Vorrichtung nach Anspruch 11 oder 12, dadurch gekennzeichnet, daß eine von der Sinterform umgebene Elektrode (13) zentrisch zu einer die Form umhüllenden Mantelelektrode (12) angeordnet ist.

16. Vorrichtung nach einem der Ansprüche 11 bis 14, dadurch gekennzeichnet, daß der Abstand zwischen den Elektroden (2, 3) bzw. (12, 13) einstellbar ist.

17. Vorrichtung nach einem der Ansprüche 11 bis 16, dadurch gekennzeichnet, daß die Feldstärke regelbar ist.

## Claims

1. Method of producing ceramic moulded bodies from pulverulent, inorganic raw materials by combining the particles in a sintering mould by means of a stationary electric high-voltage field and by subsequently sintering the arrangement of particles obtained in the sintering mould, characterised in that the configuration of the line of force is adapted to the geometry and the desired mechanical properties of the ceramic moulded body, a charge - preferably negative - is applied to the particles prior to their introduction into the sintering mould, an electrostatic field is maintained between a location on the feed path of the particles and at least one external surface of the sintering mould, this electrostatic field has a field intensity which produces a high density for the combined particles, which are deposited in the sintering mould, and the charged particles are uniformly apportioned and are fed, dry, into a sintering mould formed from an electrically non-conductive material.

2. Method according to claim 1, characterised in that the field intensity of the electrostatic field corresponds approximately to the dielectric strength and preferably lies within the range of more than 100 kV/m to about 600 kV/m.

3. Method according to claim 1 or 2, characterised in that the charged particles are supplied in a substantially rectified manner with the force of gravity.

4. Method according to one or more of claims 1 to 3, characterised in that the electrostatic field is kept largely constant during the filling of the sintering mould by adjusting the voltage.

5. Method according to one or more of claims 1 to 4, characterised in that the effect of the electrostatic field upon the charged particles is produced in a substantially rectified manner with the force of gravity, improved mechanical properties being achieved in this preferred direction.

6. Method according to one or more of claims 1 to 4, characterised in that the effect of the electrostatic field upon the charged particles is produced substantially vertically relative to the force of gravity, more uniform mechanical properties being achieved in all directions.

7. Method according to claim 6, characterised in that an additional mechanical force is superimposed on the force of gravity parallel to the field direction.

8. Method according to one or more of claims 1 to 7, characterised in that the particles have a range of particle sizes from 0 to 1 mm, preferably from 0.03 to 0.06 mm, a narrow region of the particle strip being especially preferred in the above-mentioned range of particle sizes.

9. Method according to one or more of claims 1 to 8, wherein dry particles are used, characterised in that the method is carried out in an atmosphere having a relative humidity which does not exceed 45 %.

10. Method according to one or more of claims 1 to 9, characterised in that a sintering mould formed from sintered corundum is used.

11. Apparatus for accomplishing the method according to one of claims 1 to 10, comprising at least one source of voltage, a positive electrode and a negative electrode for producing an electrostatic field, at least one sintering mould, a means for supplying particles and a subsequently connected sintering furnace, characterised in that a first electrode (3, 13) for charging the particles is disposed on the feed path of the particles and a second electrode (2, 12) is disposed on an external surface of the sintering moulds, the sintering moulds being formed from an electrically non-conductive material which remains stable at sintering temperature.

12. Apparatus according to claim 11, characterised in that a sieve (5) is provided for the uniform and approportioned supply of the inorganic particles.

13. Apparatus according to claim 11 or 12, characterised in that in that the first electrode is an annular electrode (3), by means of which the particles are feedable, whereby they are charged and the second electrode (2) is disposed beneath the sintering mould.

14. Apparatus according to claim 11 or 12, characterised in that the first electrode is a bar electrode, at the tip of which the particles are preferably charged by corona discharge before the particles are deposited in the sintering mould (4) due to the electrostatic field.

15. Apparatus according to claim 11 or 12, characterised in that an electrode (13), surrounded by the sintering mould, is disposed centrally relative to a sheathed electrode (12), which covers the mould.

16. Apparatus according to one of claims 1 to 14, characterised in that the spacing between the electrodes (2, 3) or (12, 13) is adjustable.

17. Apparatus according to one of claims 11 to 16, characterised in that the field intensity is controllable.

## Revendications

1. Procédé pour la fabrication de pièces moulées en céramique à partir de matières premières inorganiques en poudre, grâce à une réunion des particules dans un moule de frittage, à l'aide d'un champ de haute tension électrique stationnaire, puis à un frittage, dans ledit moule, de la disposition des particules obtenue, caractérisé en ce que le tracé des lignes de champ est adapté à la géométrie et aux propriétés mécaniques souhaitées de la pièce moulée en céramique, une charge de préférence négative est transmise aux particules avant l'introduction dans le moule de frittage, un champ électrostatique est maintenu entre un point de la trajectoire d'amenée des particules et au moins une surface extérieure du moule de frittage, ce champ électrostatique présente une intensité de champ qui donne une densité élevée des particules réunies se déposant dans le moule de frittage, et les particules chargées sont amenées, dosées de façon homogène et sèches, dans un moule de frittage composé d'un matériau électriquement non conducteur.

2. Procédé selon la revendication 1, caractérisé en ce que l'intensité du champ électrostatique correspond approximativement à l'intensité de champ disruptive et se situe de préférence dans la plage allant de plus de 100 kV/m à environ 600 kV/m.

3. Procédé selon la revendication 1 ou 2, caractérisé en ce que l'amenée des particules chargées se fait essentiellement dans le même sens que la force de gravité.

4. Procédé selon l'une au moins des revendications 1 à 3, caractérisé en ce que le champ électrostatique est maintenu amplement constant pendant le remplissage du moule de frittage, grâce à un rajustement de la tension.

5. Procédé selon l'une au moins des revendications 1 à 4, caractérisé en ce que la force d'action du champ électrostatique exercée sur les particules chargées suit sensiblement le même sens que la force de gravité, moyennant quoi des propriétés mécaniques meilleures sont obtenues dans ce sens préféré.

6. Procédé selon l'une au moins des revendications 1 à 4, caractérisé en ce que la force d'action du champ électrostatique exercée sur les particules chargées est sensiblement perpendiculairement à la force de gravité, moyennant quoi des propriétés mécaniques plus homogènes sont obtenues dans toutes les directions.

7. Procédé selon la revendication 6, caractérisé en ce qu'une autre force mécanique est superposée à la force de gravité, parallèlement au sens du champ.

8. Procédé selon l'une au moins des revendications 1 à 7, caractérisé en ce que les particules présentent une fraction granulométrique allant de 0 à 1 mm, de préférence de 0,03 à 0,06 mm, étant précisé qu'une plage granulométrique étroite, notamment, est préférée à l'intérieur de la fraction granulométrique indiquée.

9. Procédé selon l'une au moins des revendications 1 à 8, pour lequel des particules sèches sont utilisées, caractérisé en ce que le procédé est exécuté dans une atmosphère dont l'humidité relative ne dépasse pas 45 %.

10. Procédé selon l'une au moins des revendications 1 à 9, caractérisé en ce qu'on utilise un moule de frittage en corindon de frittage.

11. Dispositif pour l'exécution du procédé selon l'une des revendications 1 à 10, comprenant au moins une source de tension, une électrode positive et une électrode négative pour générer un champ électrostatique, au moins un moule de frittage et un mécanisme pour l'amenée de particules, ainsi qu'un four de frittage monté en aval, caractérisé en ce qu'il est prévu une première électrode (3, 13) pour charger les particules, au niveau de la trajectoire d'amenée de celles-ci, et une seconde électrode (2, 12) au niveau d'une surface extérieure des moules de frittage, étant précisé que les moules de frittage se composent d'un matériau électriquement non conducteur qui reste stable à la température de frittage.

12. Dispositif selon la revendication 11, caractérisé en ce qu'il est prévu un tamis (5) pour amener les particules inorganiques de façon homogène et dosée.

13. Dispositif selon la revendication 11 ou 12, caractérisé en ce que la première électrode est une électrode annulaire (3) à travers laquelle les particules sont aptes à être amenées, étant précisé qu'elles sont chargées et que la seconde électrode (2) est disposée sous le moule de frittage.

14. Dispositif selon la revendication 11 ou 12, caractérisé en ce que la première électrode est une électrode à tige à la pointe de laquelle les particules sont chargées de préférence par une décharge à effet corona avant de se déposer dans le moule de frittage (4) sous l'influence du champ électrostatique.

15. Dispositif selon la revendication 11 ou 12, caractérisé en ce qu'une électrode (13) entourée par le moule de frittage est disposée de façon centrée par rapport à une électrode enrobée (12) enveloppant le moule.

16. Dispositif selon l'une des revendications 11 à 14, caractérisé en ce que l'écartement entre les électrodes (2, 3) ou (12, 13) est réglable.

17. Dispositif selon l'une des revendications 11 à 16, caractérisé en ce que l'intensité de champ est réglable.
